# DEMANDE DE BREVET EUROPEEN

(11) **EP 1 783 289 A2**
(43) Date de publication de la demande: **09.05.2007**
(21) Numéro de dépôt: 06352023.3
(22) Date de dépôt: 06.11.2006
(51) Int. Cl.: E04B 2/88

(54) **Dispositif de fixation d'une cloison et d'une nappe d'isolation à une structure fixe de bâtiment, et application**

(30) Priorité: 07.11.2005 FR 0511291
(71) Demandeur: Orion Financement S.A., 11230 Chalabre (FR)
(72) Inventeur: Thierry, Laurent, 09500 Mirepoix (FR)
(74) Mandataire: Cabinet BARRE LAFORGUE & associés

(57) **Abrégé**

L'invention concerne un dispositif (1) de fixation et un procédé pour fixer un élément (30) de cloison à une structure (20) fixe de bâtiment, et pour immobiliser, entre ledit élément (30) de cloison et ladite structure (20) fixe de bâtiment, une nappe (40) d'isolation de structure fibreuse.

Ce dispositif (1) de fixation comprend une tige d'ancrage présentant une portion filetée ayant une extrémité libre acérée ; des moyens d'assemblage permettant son assemblage à un élément (40) de cloison ; une platine (11) d'appui rigide -notamment en compression-. Cette platine (11) d'appui comprend un alésage traversant permettant le passage de la portion filetée de la tige d'ancrage, et une face d'appui. Cette face d'appui s'étend autour de cet alésage et est adaptée pour pouvoir être disposée plaquée au contact d'une région de la surface de la nappe (40) d'isolation pour la comprimer localement lorsqu'une pression est exercée sur la platine (11) d'appui.

## Description

L'invention concerne les méthodes et les dispositifs permettant de fixer et/ou de suspendre des cloisons, telles que faux plafonds et cloisons d'habillage de murs (on parle aussi de contre cloisons, de cloisons de doublage) à des structures fixes de bâtiment -notamment des éléments de charpente, un plancher, un mur-.

L'invention concerne plus particulièrement l'installation de cloisons derrière lesquelles des nappes d'isolation thermique et/ou phonique peuvent être dissimulées et en particulier, des nappes d'isolation composées au moins en partie en un matériau de structure fibreuse (par exemple ouate, laine minérale, laine animale...). Ces nappes d'isolation peuvent être monocouches ou être formées de la superposition de plusieurs couches de matériau(x). Eventuellement, parmi ces couches, on peut trouver un ou plusieurs films continus, réalisés en matériau réflecteur et/ou en matériau polymérique, intercalés entre les couches fibreuses et/ou recouvrant les faces de ces couches.

L'installation et le maintien en place d'éléments de cloison, avec la(les) nappe(s) d'isolation, font classiquement intervenir des dispositifs de fixation (on parle aussi de dispositifs de suspente dans le cas des faux plafonds) qui servent d'organes de connexion entre ces éléments de cloison et la structure fixe de bâtiment.

Dans tout le texte, le terme "élément de cloison" permet de désigner aussi bien une cloison en tant que telle, qu'un panneau constitutif d'une telle cloison ou qu'un profilé (ou rail) d'une ossature métallique destinée à entrer en prise avec une cloison ou un panneau.

Les dispositifs de fixation présentent en général au moins deux parties fonctionnelles essentielles. La première de ces deux parties fonctionnelles est adaptée pour pouvoir opérer une liaison avec au moins un élément de cloison. La deuxième partie fonctionnelle permet d'ancrer le dispositif de fixation dans la masse de la structure fixe de bâtiment.

La présente invention concerne plus particulièrement cette deuxième partie fonctionnelle des dispositifs de fixation.

Parmi les dispositifs de fixation adaptés pour réaliser une connexion solide entre des éléments de cloison et une structure fixe de bâtiment tout en permettant de maintenir en place une nappe d'isolation thermique et/ou phonique, dans l'interstice laissé entre la structure fixe de bâtiment et la cloison assemblée, on peut citer en exemple le dispositif de fixation décrit par FR 2 581 407.

Dans ce dispositif de fixation particulier, la partie fonctionnelle, qui permet un ancrage rigide à la structure fixe de bâtiment, consiste en une tige filetée adaptée pour pouvoir percer la structure fixe de bâtiment et pour pouvoir être vissée directement dans la masse de cette structure fixe de bâtiment.

Pour immobiliser une nappe d'isolation dans l'interstice laissé entre la structure fixe de bâtiment et la cloison à installer, celle-ci est plus ou moins tendue entre plusieurs de ces dispositifs de fixation implantés en plusieurs zones d'ancrage, choisies sur une ou sur différentes structures fixes de bâtiment. La tige filetée de chacun de ces dispositifs de fixation est vissée dans la masse de la structure fixe de bâtiment et au travers de la nappe d'isolation préalablement disposée à recouvrement des zones d'ancrage.

Simple, de prime abord, le vissage d'une tige filetée d'un tel dispositif de fixation, dans l'épaisseur de la structure fixe de bâtiment et au travers de la nappe d'isolation, se révèle souvent délicat en raison des fibres du matériau d'isolation qui viennent s'enrouler et s'entortiller autour de la tige filetée. La progression de la tige filetée, à travers l'épaisseur de la nappe d'isolation et à travers la structure fixe de bâtiment, se trouve de ce fait considérablement contrariée.

Mais, outre la difficulté à mettre en place un tel dispositif de fixation, en raison de la déstructuration du réseau de fibres du matériau d'isolation causée par l'enroulement des fibres sur la tige filetée, le pouvoir isolant de la nappe d'isolation peut également s'en trouver sensiblement altéré.

L'invention a pour objectif de remédier aux inconvénients précédemment évoqués. En particulier, l'invention vise à proposer un dispositif de fixation qui soit adapté pour pouvoir réaliser une connexion entre des éléments de cloison et une structure fixe de bâtiment tout en permettant de maintenir en place une nappe d'isolation, thermique et/ou phonique, sans détérioration de ses propriétés d'isolation.

L'invention vise de façon générale à proposer un dispositif de fixation pour fixer et/ou pour suspendre des éléments de cloison à des structures fixes de bâtiment, qui soit amélioré tant en terme de facilité et rapidité d'utilisation qu'en terme de coûts de fabrication.

A cet effet, l'invention concerne un dispositif de fixation pour fixer un élément de cloison à une structure fixe de bâtiment et pour immobiliser, entre ledit élément de cloison et ladite structure fixe de bâtiment, une nappe d'isolation comprenant au moins une couche de structure fibreuse. Un tel dispositif de fixation comprend :
- une tige d'ancrage présentant une portion filetée ayant une extrémité libre acérée de sorte qu'elle peut percer ladite structure fixe de bâtiment et qu'elle peut être vissée dans celle-ci,
- des moyens d'assemblage adaptés pour permettre son assemblage à un élément de cloison.

Selon l'invention, ce dispositif de fixation est caractérisé en ce qu'il comprend également une platine d'appui rigide -notamment rigide en compression-, qui comprend elle-même :
- un alésage traversant adapté pour permettre le passage de la portion filetée de la tige d'ancrage,
- une face libre, dite face d'appui, s'étendant autour de cet alésage et adaptée pour pouvoir être disposée plaquée au contact d'une région de surface de la nappe d'isolation pour comprimer localement cette dernière lorsqu'une pression est exercée sur la platine d'appui.

L'invention, définie dans sa portée la plus générale, n'est en rien limitée, en termes de caractéristiques structurelles, par lesdits moyens d'assemblage qui permettent au dispositif de fixation de retenir et de maintenir en place les éléments de cloison (par exemple, des profilés constitutifs d'une ossature métallique destinée à recevoir le(s) panneau(x) formant la cloison finale). Ces moyens d'assemblage, qui peuvent être de structures très diverses, sont très largement décrits en eux-mêmes dans l'état de la technique. Classiquement, ils comprennent notamment un organe traditionnellement appelé « tête d'assemblage », spécifiquement conçu pour pouvoir être assemblé à un profilé d'une ossature métallique.

Au demeurant, une particularité essentielle de l'invention réside dans l'utilisation particulière d'une platine d'appui conforme à l'invention spécifiquement pour les opérations de fixation de cloisons, telles que faux plafonds et cloisons d'habillage de murs.

L'utilisation d'une platine d'appui, réalisée en matériau(x) rigide(s) conformément à l'invention, présente de nombreux avantages tant au niveau de la qualité finale du montage des cloisons qu'en terme de facilité des opérations de montage.

Même dans sa forme la plus générale, une platine d'appui d'un dispositif de fixation selon l'invention, utilisée de façon appropriée comme notamment précisé dans le procédé ci-après, permet de faciliter considérablement les opérations visant à implanter ledit dispositif de fixation sur une structure fixe de bâtiment et au travers d'une nappe d'isolation de structure fibreuse.

En particulier, une platine d'appui d'un dispositif de fixation selon l'invention permet avantageusement de comprimer localement l'épaisseur de la nappe d'isolation. Pour cela, il suffit de la positionner au contact de la surface d'une nappe d'isolation qui revêt une structure fixe de bâtiment et d'exercer, par exemple de façon manuelle, une pression sur cette platine ; l'épaisseur de la nappe d'isolation est ainsi localement comprimée, contrainte entre la platine d'appui rigide et la structure fixe de bâtiment, également rigide. Dans la région de compression, les fibres du matériau d'isolation se trouvent bloquées sous la compression de la platine d'appui. A ce niveau, le vissage de la tige d'ancrage provoque la rupture des fibres du matériau en de petits fragments, trop courts pour pouvoir s'entortiller autour de la tige d'ancrage. La progression de la tige d'ancrage à travers la nappe d'isolation et dans l'épaisseur de la structure fixe de bâtiment n'est plus entravée par l'enroulement des fibres.

L'implantation de la tige d'ancrage, à travers la nappe d'isolation et dans la structure fixe de bâtiment, n'occasionne qu'un trou de taille relativement faible qui, finalement, est comblé par la tige d'ancrage. La déstructuration de la nappe d'isolation est insignifiante, et le matériau d'isolation conserve globalement toutes ses propriétés mécaniques et physiques.

L'invention s'étend également à l'utilisation d'un tel dispositif de fixation dans le cadre de la mise en oeuvre d'un procédé de fixation d'un élément de cloison à une structure fixe de bâtiment. Dans un tel procédé conforme à l'invention :
- on choisit, sur une structure fixe de bâtiment, une zone d'ancrage adaptée pour pouvoir recevoir ledit dispositif de fixation, puis
- on positionne au moins une nappe d'isolation à recouvrement de ladite zone d'ancrage, et
- au niveau de ladite zone d'ancrage, on visse la tige d'ancrage dudit dispositif de fixation dans la structure fixe de bâtiment et au travers de la nappe d'isolation.

Selon l'invention, pour mettre en place ledit dispositif de fixation et ladite nappe d'isolation :
- on comprime localement l'épaisseur de la nappe d'isolation entre la structure fixe de bâtiment et une platine d'appui rigide - notamment rigide en compression- comprenant :
   - un alésage traversant adapté pour permettre le passage de la portion filetée de la tige d'ancrage,
   - une face libre, dite face d'appui, s'étendant autour de cet alésage et adaptée pour pouvoir être disposée plaquée au contact d'une région de surface de la nappe d'isolation pour comprimer localement ladite nappe d'isolation sous l'effet d'une pression exercée sur la platine d'appui,
- puis on visse la tige d'ancrage dudit dispositif de fixation dans la structure fixe de bâtiment au travers dudit alésage traversant de la platine d'appui, et au travers de la nappe d'isolation comprimée, et
- on assemble le reste du dispositif de fixation et l'élément de cloison.

Selon un mode de réalisation préférentiel de l'invention, on utilise une platine d'appui qui comprend des moyens adaptés pour minimiser le glissement réciproque entre la face d'appui de la platine d'appui, et la nappe d'isolation.

A titre de moyens propices à une meilleure manipulation de la platine d'appui, notamment pour éviter que celle-ci ne se dérobe sous les doigts de l'opérateur lorsque ce dernier exerce une pression sur la platine d'appui pour comprimer l'épaisseur de la nappe d'isolation, on peut envisager d'utiliser une platine d'appui présentant une surface d'appui nervurée. Dans le même contexte, on peut également envisager d'utiliser une platine d'appui ayant une face d'appui de surface rugueuse.

Selon une variante de réalisation d'une platine d'appui pourvue de moyens anti-glissement conformes à l'invention, on peut envisager que cette platine présente au moins un ergot acéré, adapté pour pouvoir être planté dans au moins une partie de l'épaisseur de la nappe d'isolation. Lorsque la face d'appui est plaquée sur la surface de la nappe d'isolation, le(les) ergot(s) acéré(s) de cette platine d'appui s'enfonce(nt) dans l'épaisseur de la nappe d'isolation et bloque(nt) ainsi tout mouvement de translation entre la platine d'appui et la nappe d'isolation.

Avantageusement et selon cette même variante de réalisation, 1'(les) ergot(s) d'une platine d'appui selon l'invention est(sont) adapté(s) -notamment de par sa(leurs) longueur(s)- pour pouvoir être planté(s) dans la structure fixe de bâtiment au travers de l'épaisseur de la nappe d'isolation.

Avec une telle platine d'appui, on épingle avantageusement la nappe d'isolation sur la structure fixe de bâtiment. Egalement, en enfonçant jusqu'à butée cette platine d'appui, notamment au moyen d'un marteau, on comprime durablement la nappe d'isolation. La nappe d'isolation étant mécaniquement maintenue en place et comprimée, l'opérateur dispose favorablement de ces deux mains pour pouvoir visser correctement et avec précision la tige d'ancrage.

Selon une autre variante de réalisation d'une platine d'appui conforme à l'invention, la face d'appui présente avantageusement une forme globalement tronconique d'axe principal se confondant avec l'axe de l'alésage. Selon cette même variante de réalisation, avantageusement et selon l'invention, cette face d'appui de forme globalement tronconique présente une base à bord évasé s'étendant selon une direction centrifuge.

Selon une autre approche pour perfectionner un dispositif de fixation et un procédé de fixation conformes à l'invention, avantageusement et selon l'invention, on utilise une platine d'appui avec un alésage taraudé, le taraudage dudit alésage et le filetage de la tige d'ancrage étant conjugués. Selon ce mode de réalisation particulier, la rondelle d'appui sert avantageusement également d'organe de guidage facilitant le vissage de la tige d'ancrage dans la structure fixe de bâtiment.

Egalement, avantageusement et selon l'invention, la tige d'ancrage d'un dispositif de fixation selon l'invention présente une tête, opposée à l'extrémité libre acérée, adaptée pour pouvoir venir en appui contre la platine d'appui et exercer une pression sur la platine d'appui et la nappe d'isolation, en fin de vissage. Selon ce mode de réalisation particulier de l'invention, la platine d'appui ne permet pas seulement, par un effet de compression, de faciliter le vissage de la tige d'ancrage et de préserver l'intégrité structurelle de la nappe d'isolation. Elle permet aussi de renforcer efficacement le contact entre la nappe d'isolation et la structure fixe de bâtiment, et améliore ainsi l'isolation finale.

En particulier, lorsque la nappe d'isolation en question est formée d'une superposition de couches, notamment de films thermoplastiques et/ou de films réflecteurs, l'implantation de la tige d'ancrage à travers la nappe d'isolation n'occasionne pas qu'une simple perforation du matériau, elle ouvre d'une couche à l'autre un passage propice aux échanges thermiques par convection. Mais en vissant jusqu'à butée la tige d'ancrage, la platine d'appui comprime alors tout le pourtour de la performation et scelle les espaces intercalaires entre les différentes couches.

En outre, avantageusement et selon l'invention, dans un procédé visant à fixer un élément de cloison à une structure fixe de bâtiment et à immobiliser une nappe d'isolation, entre ledit élément de cloison et ladite structure fixe de bâtiment, on assemble chaque dispositif de fixation conforme à l'invention, à une cloison ou à un panneau constitutif de ladite cloison, par l'intermédiaire d'un profilé métallique constitutif d'une ossature adaptée pour recevoir la cloison finale ou les panneaux qui formeront la cloison finale.

Selon ce mode de réalisation, ledit profilé métallique fait ainsi office d'élément de paroi au sens de l'invention, et un dispositif de fixation selon l'invention comprend une tête d'assemblage spécifiquement adaptée pour pouvoir retenir et maintenir en place ledit profilé.

Cette tête d'assemblage peut être amovible par rapport au reste du dispositif de fixation. Elle peut aussi faire partie intégrante et être normalement indissociable de celui-ci.

Selon un mode de réalisation particulier dans lequel la tête d'assemblage d'un dispositif de fixation selon l'invention est amovible, ledit dispositif de fixation se compose aussi d'une tige de raccordement ; la tige d'ancrage et ladite tête d'assemblage sont raccordées l'une à l'autre par l'intermédiaire de cette tige de raccordement. Des moyens de couplage réciproques sont pourvus à une extrémité de la tige de raccordement et sur ladite tige d'ancrage. Et, ladite tête d'assemblage est dotée de moyens adaptés pour permettre son assemblage sur au moins une longueur de ladite tige de raccordement.

Avantageusement et selon ce mode de réalisation, ladite tige de raccordement est filetée et ladite tige d'ancrage est munie d'une tête à l'intérieur de laquelle est ménagée une cavité taraudée de façon à permettre un raccordement entre la tige de raccordement et la tige d'ancrage, par vissage de ladite tige de raccordement dans ladite cavité.

Avantageusement, une tête d'assemblage d'un dispositif de fixation conforme à l'invention présente un alésage traversant apte à permettre un enfilement de ladite tête d'assemblage au moins sur une longueur de la tige de raccordement. Des moyens de blocage permettent de verrouiller en position la tête d'assemblage par rapport à la tige de raccordement

Ces moyens de blocage peuvent être extérieurs à la tête d'assemblage, et peuvent consister, par exemple, simplement en un(des) boulon(s) de serrage.

Ces moyens de blocage peuvent également faire partie intégrante de la tête d'assemblage. A ce titre, on peut citer en exemple le dispositif décrit dans FR 2 779 467.

Bien entendu, des moyens de connexion autres qu'une tige de raccordement, telle que précédemment évoquée, peuvent également être envisagés pour réaliser l'assemblage entre la tête d'assemblage et la tige d'ancrage conformes à ce premier mode de réalisation particulier.

Selon un autre mode de réalisation d'un dispositif de fixation selon l'invention, dans lequel la tête d'assemblage est amovible du reste du dispositif de fixation, ladite tête d'assemblage est avantageusement adaptée pour pouvoir être raccordée directement à une tige d'ancrage conforme à l'invention (sans nécessiter aucune tige de raccordement intermédiaire). Avantageusement et selon l'invention, celle-ci est dotée de moyens adaptés pour permettre son assemblage sur au moins une partie de la tige de raccordement.

L'invention concerne en outre un dispositif de fixation, un procédé de fixation d'un élément de cloison à une structure fixe de bâtiment ainsi qu'un procédé d'installation d'une cloison, de type faux plafond et/ou cloison d'habillage de murs, caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées dans lesquelles :
- la figure 1 est une vue schématique en coupe, par rapport à un plan perpendiculaire à la direction longitudinale d'un profilé, d'un dispositif de fixation selon un premier mode de réalisation conforme à l'invention ; le dispositif de fixation est représenté ancré à une poutre et immobilisant une nappe d'isolation de structure fibreuse,
- la figure 2 est une vue schématique en perspective du dispositif de fixation précédent, représenté en pièces détachées,
- la figure 3 est une vue schématique de différents modes de réalisation d'une platine d'appui constitutive d'un dispositif de fixation selon l'invention,
- la figure 4 est une vue schématique en coupe, par rapport à un plan perpendiculaire à la direction longitudinale d'un profilé, d'un dispositif de fixation selon un deuxième mode de réalisation conforme à l'invention ; le dispositif de fixation est représenté ancré à une poutre et immobilisant une nappe d'isolation multicouche,
- la figure 5 est une vue schématique en perspective du dispositif de fixation précédent, représenté avant sa mise en place.

Les figures évoquées et la description ci-après visent à illustrer deux dispositifs de fixation particuliers conformes à l'invention. Ces dispositifs de fixation 1 et 1' y sont décrits essentiellement au vu des caractéristiques nouvelles apportées par la présente invention, et au vu des avantages qui peuvent en découler. En particulier, ces caractéristiques nouvelles et ces avantages, qui sont propres à la présente invention, résident en grande partie spécifiquement dans la platine d'appui du dispositif de fixation en question et dans la manière de s'en servir.

Dès lors, il convient de noter que, toute autre partie constitutive d'un dispositif de fixation selon l'invention, en particulier, les moyens d'assemblage (par exemple, tête d'assemblage et tige de raccordement) qui interviennent dans la rétention et le maintien en place des éléments de cloison, est décrite principalement à titre d'information visant à une meilleure compréhension de l'invention. Cette description générale ne limite en rien la portée de la présente invention.

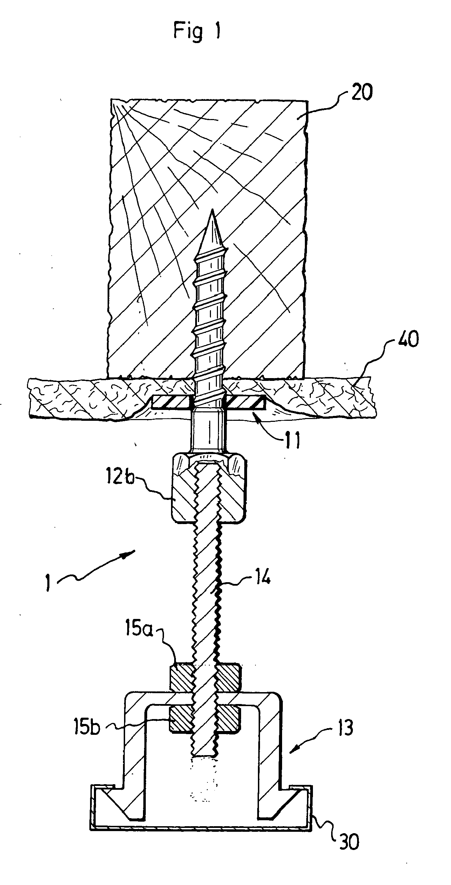

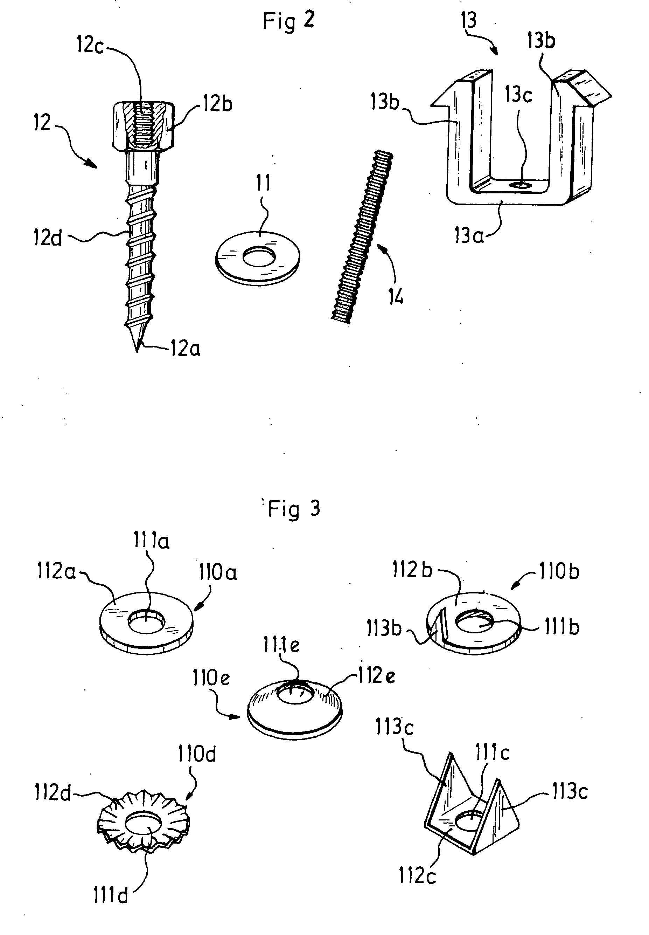

En référence aux figures 1 et 2, un dispositif 1 de fixation comprend une tige 12 d'ancrage, une platine 11 (110a-100e) d'appui réalisée en matériau rigide -en particulier en métal-, une tête d'assemblage 13 et une tige 14 de raccordement.

Ces différents éléments, comme illustrés par la figure 1, sont adaptés pour pouvoir collaborer ensemble et pour constituer un ensemble fonctionnel, en l'occurrence un dispositif de suspente, apte à réaliser une connexion rigide entre le profilé 30 et une poutre 20 (faisant office de structure fixe de bâtiment, au sens de l'invention), et pour pouvoir immobiliser, entre ce profilé 30 et cette poutre 20, une nappe 40 d'isolation comprenant au moins une couche de structure fibreuse.

En vue de rendre la description plus claire, on considérera, dans toute la suite, chacun des éléments constitutifs dudit dispositif de fixation, avec la même orientation que dans une forme assemblée telle que représentée à la figure 1 (c'est-à-dire, un dispositif 1 de fixation solidement et verticalement ancré dans la masse d'une structure 20 fixe de bâtiment), les termes "haut", "bas", "supérieur", "inférieur" se référant à cette position.

La tige 12 d'ancrage qui, telle que représentée, consiste en une vis auto-taraudeuse. Ici, le terme de "vis auto-taraudeuse" est utilisé pour désigner de manière très générale toute vis dont la tige filetée est adaptée pour pouvoir elle-même percer un corps solide (par exemple, bois, plâtre, brique, béton, métal...) et permettre ainsi son ancrage dans la masse de ce corps solide.

Au vu de sa forme particulière telle que représentée, on peut aussi parler de tire-fond.

De manière schématique, cette tige 12 d'ancrage présente une portion 12d filetée ayant une extrémité 12a libre acérée qui lui permet de pouvoir être vissée directement dans la poutre 20. Par ailleurs, cette tige 12 d'ancrage présente une tête 12b avec une cavité 12c taraudée.

La platine 110a d'appui rigide est représentée dans la figure 3, selon une version très élémentaire ; elle reprend toutefois l'ensemble des caractéristiques essentielles propres à une platine d'appui rigide d'un dispositif 1 de fixation selon l'invention. Des variantes 110b, 110c, 110d et 110e, de structure plus sophistiquée, sont également représentées dans la figure 3.

De manière générale, une platine 11 d'appui conforme à l'invention, présente un alésage traversant de dimensions adaptées pour permettre le passage de la portion 12d filetée de la tige 12 d'ancrage, et pour permettre à la tête 12b de la tige 12 d'ancrage de venir faire appui contre la platine 11 d'appui.

Cette platine 11 d'appui présente également une face d'appui, plus ou moins plate ou tronconique, et qui s'étend autour de l'alésage traversant. La face d'appui de la platine 11 d'appui peut ainsi être disposée plaquée au contact d'une région de surface de la nappe 40 d'isolation. Ainsi disposée, lorsqu'on exerce une pression sur la platine 11 d'appui, on comprime localement dans cette région l'épaisseur de la nappe 40 d'isolation.

La tête d'assemblage 13 est de géométrie adaptée pour pouvoir former une liaison bloquante avec un profilé 30.

Cette tête d'assemblage 13, en forme de U renversé, est formée d'une platine 13a supérieure horizontale et de deux pattes 13b s'étendant vers le bas à partir de deux côtés opposés de la platine 13a et dans des plans verticaux. Les pattes 13b de cette tête d'assemblage 13, comme illustrées, permettent un blocage et un maintien en position du profilé 30, essentiellement par déformation élastique des pattes 13b. La platine 13a est percée en son milieu d'un alésage 13c traversant.

La tige 14 de raccordement est ronde et filetée. Le filetage de cette tige 14 de raccordement et le taraudage de la cavité 12c de la tige 12 d'ancrage sont conjugués. La tige 14 de raccordement est destinée à venir se visser dans la cavité 12c de la tête 12b.

Egalement, la section de la tige 14 de raccordement est adaptée pour lui permettre de s'engager et de coulisser dans l'alésage 13c traversant de la tête d'assemblage 13.

Après avoir choisi la position finale de la tête d'assemblage 13 sur la tige 14 de raccordement, deux boulons 15a et 15b de serrage rapportés permettent d'assurer un blocage en position de celle-ci.

Bien entendu, l'utilisation de têtes d'assemblage autres que celle illustrée dans les figures annexées peut être envisagée. Cette tête d'assemblage 13 particulière n'est décrite qu'à titre d'exemple ; elle ne limite en rien la portée de l'invention. Au demeurant, la tête d'assemblage objet du brevet FR 2 581 407 peut être utilisée de manière très satisfaisante.

En référence à la figure 3, une platine 11 d'appui selon l'invention peut avoir une forme très simple. En particulier, il peut s'agir d'une rondelle 110a. Comme représentée, cette rondelle 110a peut être relativement plate et est percée en son centre d'un alésage 111a traversant.

Comme illustrée, une platine d'appui selon l'invention présente une forme générale qui n'a que peu d'importance ; elle peut être plus ou moins ronde, plus ou moins plane, plus ou moins carrée... Elle est cependant nécessairement percée d'un alésage traversant et sa face d'appui et éventuellement la face opposée à cette face libre sont choisies dans des dimensions suffisantes pour permettre une manipulation pratique pour l'opérateur.

Les platines d'appui 110b, 110c et 110d, se distinguent de la rondelle 110a par le fait qu'elles sont dotées de moyens permettant de minimiser les phénomènes de glissement avec la surface de la nappe 40 d'isolation.

Dans ce contexte, la rondelle 110b et la pièce 110c aptes à faire office de platine d'appui selon l'invention sont munies d'ergots 113b et 113c en forme de dents de scie, adaptés pour pouvoir être ancrés dans l'épaisseur d'une nappe d'isolation. Eventuellement, comme dans le cas de la pièce 110c, les ergots 113c sont destinés non seulement à transpercer de part en part l'épaisseur de la nappe d'isolation, mais aussi, à se planter dans la masse d'une structure fixe de bâtiment.

Pour minimiser les phénomènes de glissement éventuels entre la platine d'appui et la nappe d'isolation, on peut également utiliser une rondelle dentelée 110d.

La platine d'appui 110e présente quant à elle une face d'appui de forme tronconique qui permet également de réduire sensiblement les effets de glissement avec la surface de la nappe 40 d'isolation. De même que pour la rondelle 110b, l'alésage 111e de la platine d'appui 110e est taraudé.

Avec un dispositif 1 de fixation selon l'invention, pour fixer un profilé 30 d'une ossature métallique à une poutre 20 et pour immobiliser entre ces deux éléments une nappe 40 d'isolation de structure fibreuse, on procède de la manière suivante.

On commence par choisir une zone d'ancrage sur une structure fixe de bâtiment, par exemple une poutre 20. On positionne la nappe 40 d'isolation à recouvrement de la zone d'ancrage choisie.

On comprime localement l'épaisseur de la nappe 40 d'isolation, dans la région correspondant à la zone d'ancrage, en maintenant une platine d'appui fermement appuyée sur la surface de cette nappe 40 d'isolation.

Tout en maintenant la nappe 40 d'isolation ainsi comprimée, on insère l'extrémité 12a acérée d'une tige 12 d'ancrage dans l'alésage de la platine d'appui et on visse solidement cette tige 12 d'ancrage dans la masse de la poutre 20 en transperçant la nappe 40 d'isolation. De préférence on visse jusqu'à arriver en fin de vissage, c'est-à-dire lorsque la partie évasée de la tige 12 d'ancrage vient en appui contre la platine d'appui.

La compression de la nappe 40 d'isolation peut être réalisée en maintenant fermement appuyée, sur la surface de cette nappe 40 d'isolation, une platine d'appui de type rondelle 110a, 110b ou 110d, de façon essentiellement manuelle. Cette compression peut également être réalisée de façon beaucoup plus simple grâce à l'utilisation d'une platine d'appui du type de celle désignée 110c, avec laquelle on épingle avantageusement la nappe 40 d'isolation. Pour une compression et un maintien efficaces de cette nappe 40 d'isolation, la platine d'appui 110c est enfoncée jusqu'à butée.

Une fois la tige d'ancrage solidement ancrée dans la poutre 20, on peut alors assembler le reste du dispositif 1 de fixation : tige 14 de raccordement, tête d'assemblage 13, boulons 15a et 15b.

On répète l'opération avec d'autres dispositifs 1 de fixation, au niveau d'autres zones d'ancrage. De préférence, chaque nappe d'isolation utilisée est maintenue plus ou moins tendue, épinglée au moyen de plusieurs dispositifs de fixation.

On assemble aux différents dispositifs 1 de fixation installés les différents profilés constitutifs de l'ossature métallique destinée à recevoir le(s) panneau(x) formant la cloison finale. Et, on termine par la mise en place de cette cloison.

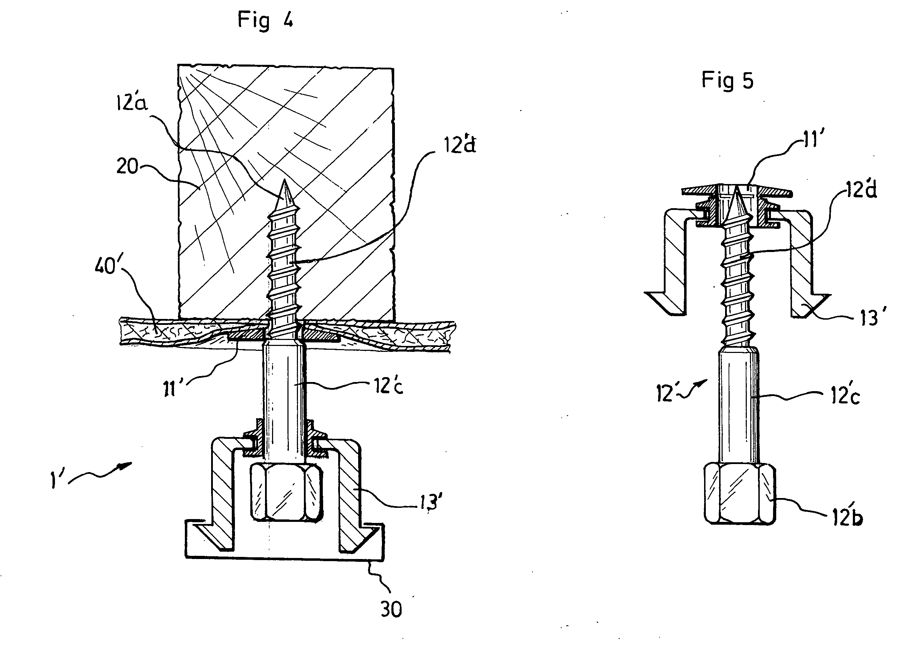

Dans un deuxième mode de réalisation d'un dispositif 1' de fixation, et tel qu'illustré par les figures 4 et 5, un dispositif 1' de fixation conforme à l'invention comprend une tige 12' d'ancrage, une platine 11' d'appui et une tête d'assemblage 13'.

La différence avec le dispositif 1 de fixation réside essentiellement dans le fait que la tête d'assemblage 13' est adaptée pour pouvoir être connectée directement à la tige 12' d'ancrage, en l'occurrence, le long du col 12'c de ce dernier. Les moyens permettant d'assurer le blocage en position de cette tête d'assemblage 13' sur une partie du col 12'c de la tige 12' d'ancrage ne sont pas illustrés dans les figures annexées.

Comme représentée à la figure 5, la platine 11' d'appui et la tête d'assemblage 13' sont initialement fournies à l'utilisateur dans une forme solidaire ; la platine 11' d'appui et la tête d'assemblage 13' sont liées l'une à l'autre par des moyens de connexion sécables. Eventuellement, la tige 12' d'ancrage est, préalablement en partie, emmanchée à travers la tête d'assemblage 13' et éventuellement également à travers la platine 11' d'appui.

Sur la surface d'une nappe 40' d'isolation multicouche préalablement appliquée sur une zone d'ancrage d'une structure 20 fixe de bâtiment, on applique l'ensemble du dispositif 1' de fixation de façon à comprimer, avec la platine d'appui 11', l'épaisseur de cette nappe 40' d'isolation contre ladite structure 20 fixe de bâtiment. Tout en maintenant la nappe 40' d'isolation ainsi comprimée, on visse la tige 12' d'ancrage dans la masse de la structure 20 fixe, à travers la nappe 40' d'isolation, la tête d'assemblage 13' et la platine 11' d'appui. Une fois la tige 12' d'ancrage arrivée en butée, on rompt les moyens de connexion sécables qui maintiennent solidaires la platine 11' d'appui et la tête d'assemblage 13'.

On fait coulisser la tête d'assemblage 13' le long du col 12'c de la tige 12' d'ancrage.

Après avoir choisi la position finale de la tête d'assemblage 13' sur le col 12'c de la tige 12' d'ancrage, on bloque en position cette tête d'assemblage 13'.

On répète l'opération avec d'autres dispositifs 1' de fixation, au niveau d'autres zones d'ancrage. On assemble aux différents dispositifs 1' de fixation installés les différents profilés constitutifs de l'ossature métallique destinée à recevoir le(s) panneau(x) formant la cloison finale. Et, on termine par la mise en place de cette cloison.

## Revendications

1. - Dispositif de fixation pour fixer un élément de cloison à une structure (20) fixe de bâtiment et pour immobiliser, entre ledit élément de cloison et ladite structure (20) fixe de bâtiment, une nappe (40) d'isolation comprenant au moins une couche de structure fibreuse;
ce dispositif de fixation comprenant :
- une tige (12 ; 12') d'ancrage présentant une portion (12d ; 12'd) filetée ayant une extrémité (12a ; 12'a) libre acérée de sorte qu'elle peut percer ladite structure (20) fixe de bâtiment et qu'elle peut être vissée dans cette structure (20) fixe de bâtiment,
- des moyens d'assemblage adaptés pour permettre son assemblage à un élément de cloison,
**caractérisé en ce qu'**il comprend une platine (11 ; 11') d'appui rigide comprenant :
- un alésage (111a; 111b ; 111c ; 111d; 111e) traversant adapté pour permettre le passage de la portion filetée de la tige (12) d'ancrage,
- une face (112a; 112b ; 112c ; 112d; 112e) libre, dite face d'appui, s'étendant autour de cet alésage (111a; 111b; 111c ; 111d ; 111e) et adaptée pour pouvoir être disposée plaquée au contact d'une région de surface de la nappe (40) d'isolation pour comprimer localement ladite nappe (40) d'isolation lorsqu'une pression est exercée sur la platine (110 ; 110a ; 110b ; 110c ; 110d; 110e) d'appui.

2. - Dispositif selon la revendication 1, **caractérisé en ce que** ladite platine (110b ; 110c ; 110d ; 110e) d'appui comprend des moyens adaptés pour minimiser le glissement réciproque entre ladite face (112b ; 112c ; 112d) libre et la nappe (40) d'isolation.

3. - Dispositif selon les revendications 1 ou 2, **caractérisé en ce que** la face (110e) d'appui présente une forme globalement tronconique conique d'axe principale se confondant avec l'axe de l'alésage (111e).

4. - Dispositif selon la revendication 3, **caractérisé en ce que** la face (110e) d'appui de forme globalement tronconique présente une base à bord évasé s'étendant selon une direction centrifuge.

5. - Dispositif selon la revendication 2, **caractérisé en ce que** ladite platine (110b ; 110c) d'appui présente au moins un ergot (113b ; 113c) acéré, adapté pour pouvoir être planté dans au moins une partie de l'épaisseur de la nappe (40) d'isolation.

6. - Dispositif selon la revendication 5, ledit ergot (113b ; 113c) est adapté pour pouvoir être planté dans la structure (20) fixe de bâtiment au travers de l'épaisseur de la nappe (40) d'isolation.

7. - Dispositif selon la revendication 2, **caractérisé en ce que** ladite face d'appui (112d) de la platine (110d) d'appui présente une surface nervurée.

8. - Dispositif selon la revendication 2, **caractérisé en ce que** ladite face d'appui de la platine d'appui présente une surface rugueuse.

9. - Dispositif selon l'une des revendications 1 à 8, **caractérisé en ce que** l'alésage (111b ; 111e) traversant de ladite platine (110b ; 110e) d'appui est un alésage taraudé ; le taraudage dudit alésage (111b ; 111e) et le filetage de la tige (12 ; 12') d'ancrage étant conjugués.

10. - Dispositif selon l'une des revendications 1 à 9, **caractérisé en ce que** ladite tige (12 ; 12') d'ancrage présente une tête (12b ; 12'b), opposée à l'extrémité (12a ; 12'a) libre acérée, adaptée pour pouvoir venir en appui contre la platine (110 ; 110a ; 110b; 110c ; 110d) d'appui et exercer une pression sur la platine (110; 110a; 110b; 110c; 110d) d'appui et la nappe (40 ; 40') d'isolation, en fin de vissage.

11. - Dispositif selon l'une des revendications 1 à 10, **caractérisé en ce que** la tige (12 ; 12') d'ancrage est adaptée pour pouvoir être raccordée à une tête d'assemblage (13 ; 13').

12. - Dispositif selon la revendication 11, **caractérisé en ce que** ledit dispositif (1) de fixation comprend une tige (14) de raccordement adaptée pour permettre un raccordement de ladite tige (12) d'ancrage à ladite tête d'assemblage (13) ; des moyens de couplage réciproques sont pourvus à une extrémité de ladite tige (14) de raccordement et sur ladite tige (12) d'ancrage ; ladite tête d'assemblage (13) est dotée de moyens adaptés pour permettre son assemblage sur au moins une longueur de ladite tige (14) de raccordement.

13. - Dispositif selon la revendication 11, **caractérisé en ce que** dans ledit dispositif (1') de fixation, la tête d'assemblage (13') est adaptée pour pouvoir être raccordée directement à la tige (12') d'ancrage.

14. - Procédé de fixation d'un élément de cloison à une structure (20) fixe de bâtiment dans lequel on utilise un dispositif (1 ; 1') de fixation adapté pour pouvoir assurer une connexion entre l'élément de cloison et la structure (20) fixe de bâtiment, ce dispositif (1 ; 1') de fixation comprenant :
- une tige (12 ; 12') d'ancrage présentant une portion filetée ayant une extrémité (12a ; 12'a) libre acérée de sorte qu'elle peut percer ladite structure (20) fixe de bâtiment et qu'elle peut être vissée dans cette structure (20) fixe de bâtiment,
- des moyens d'assemblage adaptés pour permettre son assemblage à un élément de cloison,
dans ledit procédé :
• on choisit, sur une structure (20) fixe de bâtiment, une zone d'ancrage adaptée pour pouvoir recevoir le dispositif (1) de fixation, puis
• on positionne au moins une nappe (40 ; 40') d'isolation à recouvrement de ladite zone d'ancrage, et
• au niveau de ladite zone d'ancrage, on visse la tige (12 ; 12') d'ancrage dudit dispositif (1) de fixation dans la structure (20) fixe de bâtiment et au travers de la nappe (40 ; 40') d'isolation,
**caractérisé en ce que** pour mettre en place ledit dispositif (1 ; 1') de fixation et ladite nappe (40 ; 40') d'isolation :
• on comprime localement l'épaisseur de la nappe (40 ; 40') d'isolation entre la structure (20) fixe de bâtiment et une platine (11 ; 11') d'appui rigide comprenant :
- un alésage (111a ; 111b ; 111c ; 111d ; 111e) traversant adapté pour permettre le passage de la portion filetée de la tige (12 ; 12') d'ancrage,
- une face (112a; 112b ; 112c ; 112d ; 112e) libre, dite face d'appui, s'étendant autour de cet alésage (111a ; 111b ; 111c ; 111d ; 111e) et adaptée pour pouvoir être disposée plaquée au contact d'une région de surface de la nappe (40) d'isolation pour comprimer localement ladite nappe (40) d'isolation sous l'effet d'une pression exercée sur la platine (110 ; 110a; 110b ; 110c ; 110d; 110e) d'appui,
• puis on visse la tige (12 ; 12') d'ancrage dudit dispositif (1 ; 1') de fixation dans la structure (20) fixe de bâtiment au travers dudit alésage (111a ; 111b ; 111c ; 111d ; 111e) traversant de la platine (11 ; 11') d'appui, et au travers de la nappe (40 ; 40') d'isolation comprimée, et
• on assemble le reste du dispositif (1 ; 1') de fixation et l'élément (30) de cloison.

15. - Procédé selon la revendication 14, **caractérisé en ce qu'**on utilise au moins un dispositif (1 ; 1') de fixation conforme à l'une des revendications 1 à 13.

16. - Procédé selon l'une des revendications 14 ou 15, **caractérisé en ce qu'**on maintient manuellement la compression de la nappe (40 ; 40') d'isolation pendant le vissage de la tige (12 ; 12') d'ancrage dans la structure fixe de bâtiment.

17. - Procédé selon l'une des revendications 14 ou 15, **caractérisé en ce qu'**on comprime localement l'épaisseur de la nappe (40 ; 40') d'isolation en utilisant une platine (110b ; 110c) d'appui comprenant un ergot (113b ; 113c) acéré et adapté pour pouvoir être planté dans la structure (20) fixe de bâtiment au travers de l'épaisseur de la nappe (40 ; 40') d'isolation.
